# DEMANDE DE BREVET EUROPEEN

(11) **EP 3 130 825 A1**
(43) Date de publication de la demande: **15.02.2017**
(21) Numéro de dépôt: 16182934.6
(22) Date de dépôt: 05.08.2016
(51) Int. Cl.: F16J 15/18, B01F 15/00, F16J 15/3296, F16J 15/40

(54) **DISPOSITIF D'AGITATION, CENTRALE COMPRENANT UN TEL DISPOSITIF ET PROCEDE DE CONTROLE DE L'ETANCHEITE D'UN TEL DISPOSITIF**

(30) Priorité: 13.08.2015 FR 1557727
(71) Demandeur: Société Europ'Equipement, 44350 Guerande (FR)
(72) Inventeur: DI ROCCO, Jean-Pierre, 44500 LA BAULE (FR)
(74) Mandataire: Godineau, Valérie

(57) **Abrégé**

Dispositif (1) d'agitation de compositions aqueuses, comprenant une cuve (2), au moins un arbre (5) rotatif, deux paliers (6) support par arbre (5), une garniture d'étanchéité dite intérieure par palier (6) support, ladite garniture d'étanchéité intérieure fermant au moins partiellement un passage (9) de communication de l'intérieur (2A) de la cuve (2) avec l'extérieur (2B) de la cuve via ledit palier (6), cette garniture d'étanchéité intérieure étant disposée à l'intérieur du palier (6), autour de l'arbre (5), dans ledit passage (9), et des moyens de compression de ladite garniture d'étanchéité intérieure aptes à presser, en direction de l'intérieur de la cuve (2) ladite garniture contre un siège.

Le dispositif comprend des moyens (12) de raccordement de l'extrémité du passage (9) débouchant, via le palier (6), à l'extérieur de la cuve (2) à une source (13) d'alimentation en solution aqueuse sous pression, des moyens (14) de mesure d'un paramètre représentatif du volume d'alimentation en solution aqueuse d'un ou plusieurs passages et appelé débit de fuite, des moyens (15) de définition d'une plage de référence dudit débit de fuite et des moyens (16) d'émission d'un signal d'alerte, lorsque le débit de fuite est à l'extérieur de ladite plage de référence.

## Description

L'invention concerne un dispositif d'agitation, notamment du genre malaxeur, une centrale comprenant un tel dispositif et un procédé de contrôle de l'étanchéité d'un tel dispositif.

Elle concerne plus particulièrement un dispositif d'agitation, notamment du genre malaxeur, pour l'agitation de compositions de préférence aqueuses, ledit dispositif comprenant une cuve délimitée au moins par deux parois latérales en regard et un fond, au moins un arbre rotatif dit mélangeur, deux paliers support par arbre, les paliers support d'un arbre entourant chacun ledit arbre et étant disposés chacun au moins partiellement dans un logement au niveau d'une des deux parois latérales en regard de la cuve, une garniture d'étanchéité dite intérieure par palier support, ladite garniture d'étanchéité intérieure fermant au moins partiellement un passage de communication de l'intérieur de la cuve avec l'extérieur de la cuve via ledit palier, cette garniture d'étanchéité intérieure étant disposée à l'intérieur du palier, autour de l'arbre, dans ledit passage, et des moyens de compression de ladite garniture d'étanchéité intérieure aptes à presser, en direction de l'intérieur de la cuve ladite garniture contre un siège.

Dans un tel dispositif d'agitation, il est fondamental, lorsque par exemple un tel dispositif est destiné à l'agitation de compositions durcissables, telles que du béton, d'empêcher le contenu de la cuve de fuir à l'extérieur de la cuve via les paliers.

Pour ce faire, on créé, au niveau de chaque palier, une contre-pression à l'aide d'un fluide alimentant le passage de communication entre intérieur et extérieur de la cuve qui passe par le palier. Ce fluide amené sous pression à l'intérieur dudit passage tend, au niveau dudit palier, à fuir à l'intérieur de la cuve car l'étanchéité n'est jamais parfaite.

Jusqu'à présent, le fluide utilisé est un lubrifiant, tel qu'une graisse, introduit à l'aide d'une pompe dans ledit passage. Une telle solution présente plusieurs inconvénients.

Le lubrifiant est un produit spécifique adapté pour ce type d'application de sorte que son coût est élevé. Un tel lubrifiant n'entre pas normalement dans la composition à agiter, par exemple du béton, dans le cas d'un dispositif d'agitation formant un malaxeur à béton, de sorte qu'il en résulte une pollution du produit agité. La présence nécessaire d'une pompe augmente encore le coût du dispositif. Enfin, il est impossible de disposer avec précision de la formulation de la composition mélangée car le débit de fuite du lubrifiant à l'intérieur de la cuve n'est pas connu et est aléatoire. Il varie, en particulier, en fonction de la qualité de la garniture d'étanchéité intérieure et de son niveau d'usure. Enfin, un arrêt régulier du dispositif est nécessaire pour procéder au rechargement du dispositif en lubrifiant.

Un but de l'invention est donc de pallier les inconvénients des dispositifs d'agitation précités.

A cet effet, l'invention a pour objet un dispositif d'agitation, notamment du genre malaxeur, pour l'agitation de compositions de préférence aqueuses, ledit dispositif comprenant une cuve délimitée au moins par deux parois latérales en regard et un fond, au moins un arbre rotatif dit mélangeur, deux paliers supports par arbre, les paliers supports d'un arbre entourant chacun ledit arbre et étant disposés chacun au moins partiellement dans un logement au niveau d'une des deux parois latérales en regard de la cuve, une garniture d'étanchéité dite intérieure par palier support, ladite garniture d'étanchéité intérieure fermant au moins partiellement un passage de communication de l'intérieur de la cuve avec l'extérieur de la cuve via ledit palier, cette garniture d'étanchéité intérieure étant disposée à l'intérieur du palier, autour de l'arbre, dans ledit passage, et des moyens de compression de ladite garniture d'étanchéité intérieure aptes à presser, en direction de l'intérieur de la cuve ladite garniture contre un siège,
caractérisé en ce que le dispositif comprend des moyens de raccordement de l'extrémité du passage débouchant, via le palier, à l'extérieur de la cuve à une source d'alimentation en solution aqueuse sous pression, des moyens de mesure d'un paramètre représentatif du volume d'alimentation en solution aqueuse d'un ou plusieurs passages et appelé débit de fuite, des moyens de définition d'une plage de référence dudit débit de fuite et des moyens d'émission d'un signal d'alerte, lorsque le débit de fuite est à l'extérieur de ladite plage de référence.

Grâce au fait que le dispositif comprend des moyens de raccordement de l'extrémité du passage débouchant, via le palier, à l'extérieur de la cuve à une source d'alimentation en solution aqueuse sous pression, il est donc, en configuration d'utilisation, relié à une source d'alimentation en solution aqueuse sous pression. Il en résulte un coût moindre de fonctionnement du dispositif car la solution aqueuse sous pression, qui peut être de l'eau du réseau d'eau, est moins onéreuse que n'importe quel lubrifiant utilisé jusqu'à présent.

En outre, lorsque la pression du réseau est suffisante, on peut s'affranchir de la présence d'une pompe. Lorsque la pression du réseau est insuffisante, on peut utiliser la pompe qui sert à amener de l'eau dans la cuve en créant une dérivation de cette liaison. L'utilisation d'une solution aqueuse évite toute pollution de la composition aqueuse à agiter par addition d'un constituant non inclus dans la formulation d'origine de ladite composition.

Grâce au fait que le dispositif comprend des moyens de mesure d'un paramètre représentatif du volume d'alimentation en solution aqueuse d'un ou plusieurs passages, appelé débit de fuite, on dispose d'une valeur précise du débit fuite. Il en résulte la possibilité de disposer d'une formulation plus précise de la composition en cours d'agitation et éventuellement de corriger et d'adapter la formulation de la composition en cours d'agitation ou la formulation de la composition suivante à agiter en fonction du débit de fuite mesuré.

Grâce à la possibilité d'adaptation de la formulation de la composition, il en résulte la possibilité d'accepter un débit de fuite plus élevé que dans l'état de la technique, de sorte que les opérations de maintenance consistant en un changement de la garniture d'étanchéité peuvent être espacées.

La présence des moyens de mesure et d'une plage de référence, permet, en outre, un arrêt immédiat du dispositif en cas de problème résultant, par exemple, d'un colmatage du palier ou d'une défaillance importante de la garniture d'étanchéité ou d'une autre pièce du dispositif agissant sur la qualité de l'étanchéité. Cette présence permet, en outre, un réglage fin des moyens de compression pour disposer d'un débit de fuite qui peut être maintenu sensiblement constant.

De préférence, les paliers support d'un arbre affectent chacun la forme d'un corps tubulaire coaxial à l'arbre et monté fixe en rotation et en translation par rapport audit arbre en ménageant, entre le palier et l'arbre, sur au moins une partie de la longueur dudit corps, un espace annulaire.

De préférence, au moins une partie du passage de communication de l'intérieur de la cuve avec l'extérieur de la cuve via ledit palier est formée par une partie de l'espace annulaire entre le palier et l'arbre, cet espace annulaire communiquant avec l'extérieur de la cuve au moins via un orifice radial traversant ménagé dans la paroi périphérique de délimitation du palier et formant l'extrémité du passage de communication débouchant à l'extérieur de la cuve.

De préférence, les moyens de compression disposés au moins partiellement dans l'espace annulaire entre le palier support et l'arbre comprennent, le long de l'arbre, depuis l'intérieur en direction de l'extérieur de la cuve, une lanterne et un fouloir, ladite lanterne étant munie d'une gorge périphérique externe annulaire disposée en regard de l'orifice radial traversant ménagé dans la paroi périphérique de délimitation du palier et formant l'extrémité du passage de communication débouchant à l'extérieur de la cuve, cette gorge périphérique externe de la lanterne communiquant, via au moins un passage radial traversant du corps de lanterne, avec l'intérieur de la lanterne pour former un prolongement, de la section de passage ménagée dans le palier, débouchant dans l'espace annulaire entre le palier et l'arbre.

De préférence, les moyens de compression comprennent, entre la lanterne et le fouloir, au moins une garniture d'étanchéité dite extérieure, cette garniture d'étanchéité extérieure se présentant, de préférence, sous forme d'au moins un anneau ouvert.

La réalisation de la garniture d'étanchéité sous forme d'un anneau ouvert permet de faciliter la maintenance du dispositif.

De préférence, le siège de la garniture d'étanchéité intérieure est formé par une surface annulaire s'étendant radialement autour dudit arbre, cette surface étant de préférence formée par le fond d'un lamage interne dudit palier.

Le siège de la garniture d'étanchéité intérieure et le palier étant réalisés d'une seule pièce dans le cas, par exemple, où le fond du lamage interne du palier forme ledit siège, il en résulte une simplicité de fabrication.

De préférence, la garniture d'étanchéité intérieure comprend au moins un anneau ouvert. Cette conception facilite la maintenance, en particulier le remplacement de ladite garniture.

De préférence, le dispositif comprend des moyens de transmission de données représentatives du débit de fuite mesuré à une unité de pilotage de moyens d'alimentation en constituants de la cuve. Il est ainsi possible de corriger l'alimentation en constituants de la cuve au regard du débit de fuite mesuré.

L'invention a encore pour objet une centrale pour la réalisation de composition dont au moins un constituant est une solution aqueuse, ladite centrale comprenant un dispositif d'agitation des constituants de ladite composition, des moyens d'alimentation du dispositif d'agitation en constituants de ladite composition et une unité de pilotage desdits moyens d'alimentation, caractérisée en ce que le dispositif d'agitation est conforme à celui décrit ci-dessus, et en ce que l'unité de pilotage est configurée pour piloter lesdits moyens d'alimentation en fonction du débit de fuite mesuré.

L'invention a encore pour objet un procédé de contrôle de l'étanchéité d'un dispositif d'agitation, notamment du genre malaxeur, comprenant une cuve délimitée au moins par deux parois latérales en regard et un fond, au moins un arbre rotatif dit mélangeur, deux paliers supports par arbre, les paliers supports d'un arbre entourant chacun ledit arbre et étant disposés chacun au moins partiellement dans un logement au niveau d'une des deux parois latérales en regard de la cuve, une garniture d'étanchéité dite intérieure par palier support, ladite garniture d'étanchéité intérieure fermant au moins partiellement un passage de communication de l'intérieur de la cuve avec l'extérieur de la cuve via ledit palier, cette garniture d'étanchéité étant disposée à l'intérieur du palier, autour de l'arbre, dans ledit passage, et des moyens de compression de ladite garniture d'étanchéité intérieure aptes à presser, en direction de l'intérieur de la cuve, ladite garniture contre un siège, caractérisé en ce que ledit procédé comprend, pour chaque passage, une étape d'alimentation en solution aqueuse sous pression du passage et par suite de l'intérieur de la cuve par raccordement de l'extrémité du passage débouchant, via le palier, à l'extérieur de la cuve, à une source d'alimentation en solution aqueuse sous pression, une étape de mesure d'un paramètre représentatif du volume d'alimentation en solution aqueuse d'un ou plusieurs passages et appelé débit de fuite, et en ce que, une plage de référence dudit débit de fuite ayant été définie, ledit procédé comprend en outre une étape d'émission d'un signal d'alerte, lorsque le débit de fuite est à l'extérieur de ladite plage de référence.

L'invention sera bien comprise à la lecture de la description suivante d'exemples de réalisation, en référence aux dessins annexés dans lesquels :

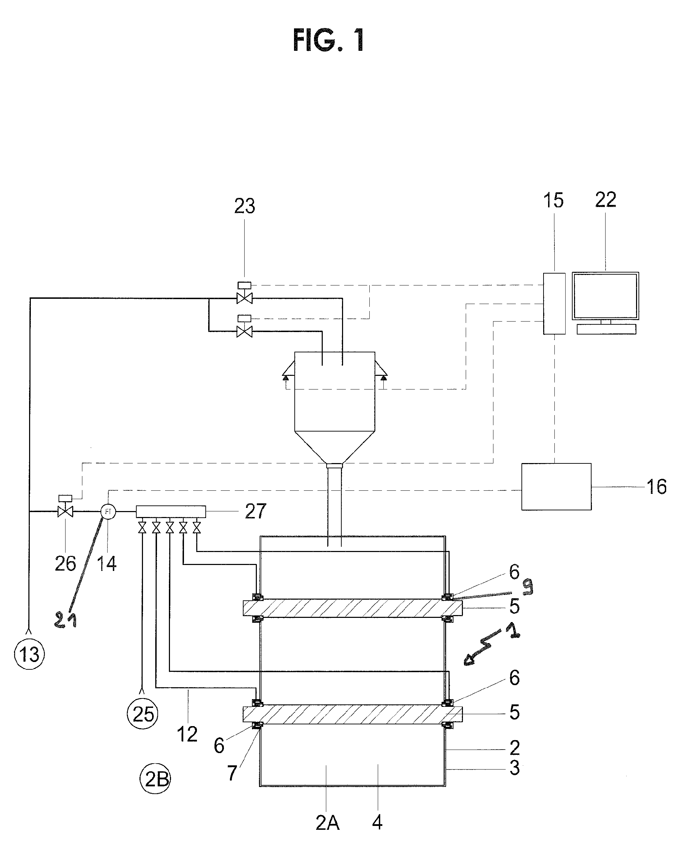

La figure 1 représente une vue schématique d'une centrale conforme à l'invention ;

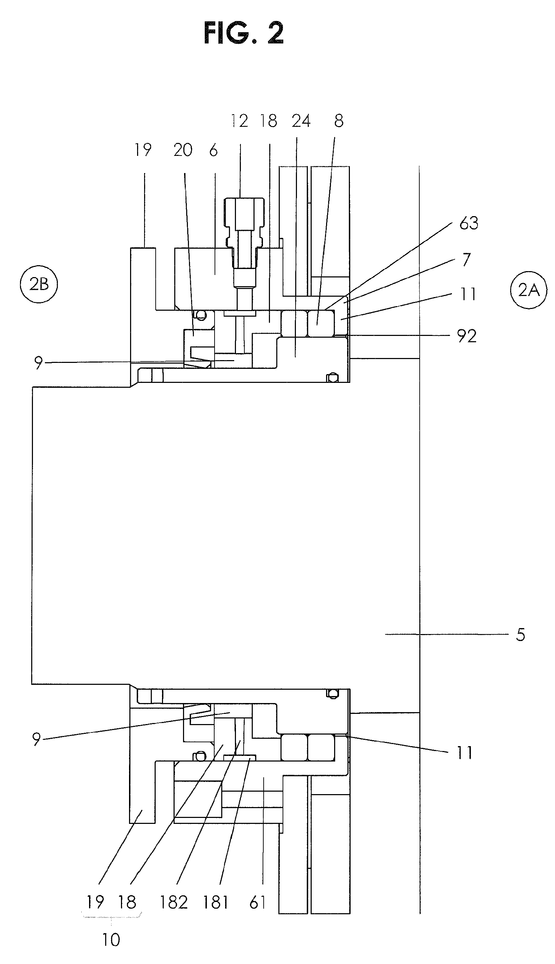

La figure 2 représente une vue partielle en coupe de l'extrémité d'un arbre d'un dispositif d'agitation conforme à l'invention ;

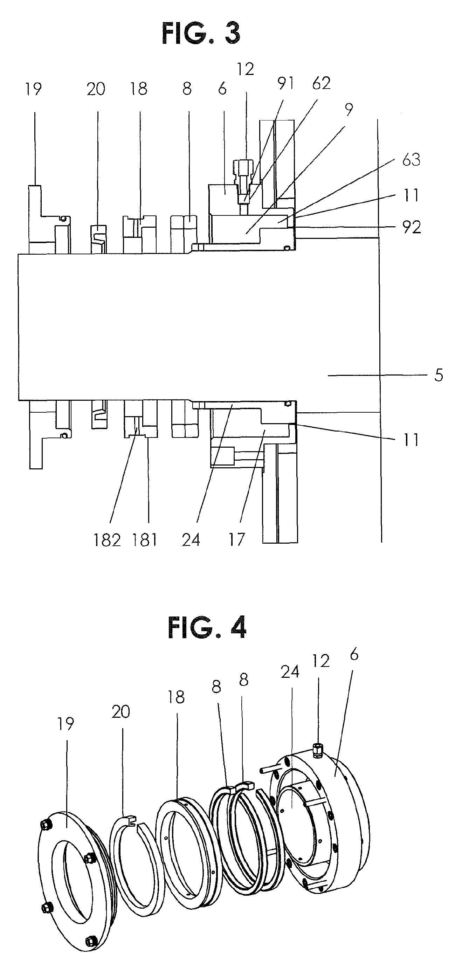

La figure 3 représente une vue partielle en coupe de l'extrémité d'un arbre d'un dispositif d'agitation conforme à l'invention à l'état éclaté des éléments le constituant ;
La figure 4 représente une vue partielle en perspective d'un palier support et des éléments logés au moins partiellement à l'intérieur du palier support en position éclatée desdits éléments.

Comme mentionné ci-dessus, l'invention a pour objet un dispositif 1 d'agitation. Ce dispositif 1 d'agitation est plus particulièrement destiné à agiter une composition dont au moins un constituant est une solution aqueuse. Généralement, cette composition est une composition durcissable. A titre d'exemple, la composition est ici du béton et le dispositif d'agitation est donc un malaxeur à béton.

Ce dispositif 1 d'agitation comprend une cuve 2 délimitée ici par deux parois 3 latérales dites longitudinales en regard, deux parois latérales transversales en regard et un fond 4.

Ce dispositif 1 comprend encore, reliant entre elles les deux parois 3 latérales longitudinales de la cuve, deux arbres 5 rotatifs dits mélangeurs.

L'invention aurait pu s'appliquer de manière similaire à un dispositif d'agitation comprenant un seul arbre. Chaque arbre 5 rotatif est généralement équipé de pales non représentées, ces pales pouvant s'interpénétrer dans le cas de la présence de plusieurs arbres. Les extrémités de chaque arbre 5 sont équipées d'un palier 6 support. Les paliers 6 supports d'un arbre 5 affectent chacun la forme d'un corps tubulaire coaxial à l'arbre 5, ce corps tubulaire étant délimité par une paroi 61 périphérique.

Ce corps tubulaire est monté fixe en rotation et en translation par rapport audit arbre 5 en ménageant entre le palier 6 et l'arbre 5 sur au moins une partie de la longueur dudit corps un espace 17 annulaire.

Ces paliers 6 supports entourent donc chacun une extrémité de l'arbre associé et sont disposés chacun au moins partiellement dans un logement 7 au niveau d'une des deux parois 3 latérales longitudinales de la cuve. Chaque palier 6 support enfilé sur une extrémité d'arbre est muni d'un lamage 63 interne dont le fond ferme partiellement une extrémité du corps tubulaire constitutif dudit palier, en l'occurrence, celle la plus proche de la cuve, en formant une surface radiale audit arbre à l'état enfilé du palier support sur l'arbre.

En d'autres termes, chaque palier 6 support est muni, au niveau de son extrémité s'insérant au moins partiellement dans un logement 7 d'une paroi 3 latérale longitudinale de la cuve 2, d'un rebord ou épaulement périphérique interne. Le bord radial interne de la surface radiale annulaire ainsi ménagée prend appui sur le pourtour de l'arbre 5 de manière indirecte ou directe. Dans l'exemple représenté, l'appui est indirect. En effet, dans l'exemple représenté le dispositif comprend un fourreau 24 par palier, ledit fourreau étant monté fixe en rotation et en translation sur l'arbre et revêtu au moins partiellement par ledit palier. Ce fourreau 24 permet de limiter l'usure de l'arbre au droit du palier. Ce fourreau 24 est ici muni d'un épaulement périphérique externe au niveau de l'extrémité du fourreau jouxtant la cuve, cet épaulement s'étendant en regard du fond et d'une partie du lamage 63 du palier en formant ainsi, avec l'intérieur de ce palier, un espace annulaire de section croissante le long de l'arbre depuis l'intérieur en direction de l'extérieur de la cuve.

Chaque palier 6 support comporte encore un orifice 62 radial traversant ménagé dans la paroi 61 périphérique de délimitation du palier et dont le rôle sera décrit ci-après.

Le dispositif 1 d'étanchéité comprend encore une garniture 8 d'étanchéité dite intérieure par palier. Cette garniture 8 d'étanchéité est dite intérieure car elle s'étend entre l'intérieur du palier et l'intérieur de la cuve. Cette garniture 8 d'étanchéité intérieure ferme au moins partiellement un passage 9 de communication de l'intérieur 2A de la cuve avec l'extérieur 2B de la cuve passant par ledit palier.

L'extrémité 91 de ce passage 9 de communication qui débouche à l'extérieur de la cuve est formée par l'orifice 62 radial traversant ménagé dans la paroi 61 périphérique de délimitation du palier.

L'extrémité 92 du passage 9 qui débouche à l'intérieur de la cuve est formée par l'espace laissé libre autour de l'arbre, entre l'arbre et l'extrémité du palier insérée dans un logement 7 d'une paroi latérale de la cuve.

Plus précisément, dans l'exemple représenté, cette extrémité 92 du passage 9 est formée par l'espace laissé libre entre le bord intérieur de la surface annulaire radiale du palier décrite ci-dessus et la surface externe du fourreau 24. Cet espace libre annulaire permet le transfert du contenu du passage dans la cuve.

Entre ces deux extrémités 91, 92, le passage 9 est formé au moins par une partie de l'espace 17 annulaire laissé libre entre le palier 6 et l'arbre 5 et par une partie des moyens 10 de compression qui seront décrits ci-après. En effet, la garniture 8 d'étanchéité intérieure est disposée à l'intérieur du palier 6 autour de l'arbre 5 dans la portion du passage correspondant à une partie de l'espace 17 annulaire entre le palier 6 et l'arbre 5. En particulier, cette garniture 8 d'étanchéité intérieure est disposée, autour du fourreau 24, entre l'épaulement périphérique externe du fourreau 24 et le lamage 63, dans la zone de lamage jouxtant le fond du lamage 63 du palier. Cette garniture 8 d'étanchéité intérieure se présente ici sous forme de deux tresses annulaires disposées côte à côte autour de l'arbre, chaque tresse formant un anneau ouvert pour faciliter la mise en place et l'enlèvement de ladite garniture d'étanchéité intérieure.

Pour assurer une fermeture au moins partiellement étanche du passage en direction de l'intérieur de la cuve à l'aide d'une telle garniture 8 d'étanchéité intérieure, le dispositif comprend encore des moyens 10 de compression de la garniture 8 d'étanchéité intérieure aptes à presser, en direction de l'intérieur de la cuve 2, ladite garniture 8 contre un siège 11.

Ce siège 11 est ici formé par le fond du lamage 63 interne du palier 6, tel que décrit ci-dessus.

Ces moyens 10 de compression disposés au moins partiellement dans l'espace 17 annulaire entre le palier 6 support et l'arbre 5 comprennent, le long de l'arbre 5, depuis l'intérieur en direction de l'extérieur de la cuve 2, une lanterne 18 et un fouloir 19 (montés déplaçables axialement le long dudit arbre. La lanterne 18 est munie d'une gorge 181 périphérique externe annulaire disposée en regard de l'orifice 62 radial traversant ménagé dans la paroi 61 périphérique de délimitation du palier 6 et formant l'extrémité 91 du passage 9 de communication débouchant à l'extérieur de la cuve 2. Cette gorge 181 périphérique externe de la lanterne 18 communique, via au moins un passage 182 radial traversant du corps de lanterne, avec l'intérieur de la lanterne 18 pour former un prolongement, de la section de passage ménagée dans le palier 6, débouchant dans l'espace 17 annulaire entre le palier 6 et l'arbre 5.

Ces moyens 10 de compression comprennent, entre la lanterne 18 et le fouloir 19, au moins une garniture 20 d'étanchéité dite extérieure apte à assurer l'étanchéité entre l'intérieur du palier et l'extérieur de la cuve. Cette garniture 20 d'étanchéité est ici formée par un joint à lèvre se présentant sous forme d'un anneau ouvert entourant l'arbre et logé au moins partiellement à l'intérieur d'un corps annulaire épaulé du fouloir. La lanterne se présente quant à elle sous forme d'une bague. La lanterne et le fouloir s'insèrent au moins partiellement à l'intérieur de l'espace annulaire entre palier et arbre pour venir, via la lanterne, comprimer la garniture d'étanchéité intérieure. La lanterne et le fouloir sont maintenus dans ladite position par l'intermédiaire de vis chargées par rondelles élastiques disposées entre palier et fouloir.
Les rondelles élastiques tendent à rappeler le fouloir et donc la lanterne en direction de la garniture d'étanchéité intérieure. L'espace annulaire entre palier et arbre loge donc, depuis le siège de la garniture d'étanchéité intérieure en direction de l'extérieur de la cuve, le long de l'arbre, la garniture d'étanchéité intérieure, la lanterne, la garniture d'étanchéité extérieure et le fouloir. Si nécessaire, pour parfaire l'étanchéité, le fouloir peut être équipé, sur sa surface périphérique externe, d'un joint torique.

Au regard de ce qui précède, on comprend que les vis de liaison du fouloir au palier peuvent être plus ou moins serrées pour faire varier la force de compression qu'exerce la lanterne sur la garniture d'étanchéité intérieure. Il en résulte une possibilité de variation de l'étanchéité entre intérieur du palier et intérieur de la cuve obtenue à l'aide de la garniture d'étanchéité intérieure. L'important est d'éviter une entrée du contenu de la cuve à l'intérieur du palier.

Pour augmenter les chances de non introduction du contenu de la cuve à l'intérieur du palier, l'extrémité 91 du passage 9 débouchant via le palier 6 à l'extérieur de la cuve est raccordée à une source 13 d'alimentation en solution aqueuse sous pression. Cette source 13 peut être formée par le réseau d'eau.

Cette source aqueuse, introduite dans le passage, crée, à l'intérieur du palier, une contre-pression qui empêche l'entrée du contenu de la cuve à l'intérieur du palier. Cette solution aqueuse tend à fuir du palier pour s'écouler dans la cuve en passant par l'extrémité 92 du passage qui débouche dans la cuve et qui est décrite ci-dessus.

Pour alimenter le passage 9 du palier en solution aqueuse, le dispositif 1 d'agitation comprend des moyens 12 de raccordement qui peuvent affecter un grand nombre de formes. Dans l'exemple représenté, ces moyens 12 de raccordement comprennent, pour chaque palier, un raccord vissé ou emmanché sur l'extrémité 91 du passage 9 débouchant via le palier à l'extérieur de la cuve. Ce raccord se prolonge par une conduite jusqu'à la sortie d'un collecteur ou répartiteur 27 auquel sont donc raccordés l'ensemble desdits passages de palier. Le répartiteur 27 comporte donc au moins autant de sorties qu'il existe de paliers. L'entrée de ce répartiteur 27 est raccordée via une conduite à la source 13 d'alimentation en solution aqueuse. En d'autres termes, les moyens 12 de raccordement comprennent un répartiteur 27 de flux raccordable en entrée à la source d'alimentation aqueuse sous pression, ce répartiteur de flux comprenant une pluralité de sorties aptes à raccorder chacune un passage d'un palier audit répartiteur. Le dispositif comprend encore des moyens 14 de mesure d'un paramètre représentatif du volume d'alimentation en solution aqueuse d'un ou plusieurs passages 9 et appelé débit de fuite. Les moyens 14 de mesure sont disposés en amont de l'entrée du répartiteur sur la partie de circuit de fluide s'étendant entre la source de solution aqueuse sous pression et ledit répartiteur. La liaison, entre l'extrémité 91 du passage et la source 13 d'alimentation aqueuse, obtenue à l'aide desdits moyens 12 de raccordement est une liaison obturable, par exemple à l'aide d'un organe 26 d'obturation, tel qu'une vanne, disposé ici entre la source de solution aqueuse et l'entrée du répartiteur 27 et d'organes d'obturation, tels que des vannes, disposés chacun entre une sortie du répartiteur et l'extrémité 91 d'un passage 9 d'un palier associé.

Dans l'exemple représenté, le dispositif comprend encore des moyens de purge des moyens de raccordement. Ces moyens de purge sont formés par une source 25 d'air comprimé raccordée au répartiteur pour alimenter les autres sorties du répartiteur à l'état fermé de l'organe 26 d'obturation disposé en amont du répartiteur.

Le dispositif 1 comprend encore, outre comme mentionné ci-dessus, des moyens 14 de mesure d'un paramètre représentatif du volume d'alimentation en solution aqueuse d'un ou plusieurs passages et appelé débit de fuite, des moyens 15 de définition d'une plage de référence dudit débit de fuite et des moyens 16 d'émission d'un signal d'alerte, lorsque le débit de fuite est à l'extérieur de ladite plage de référence. Les moyens 14 de mesure sont ici formés par un débitmètre disposé sur la liaison instaurée entre la source 13 d'alimentation en solution aqueuse et l'extrémité 91 du passage 9 débouchant à l'extérieur de la cuve 2 à l'aide desdits moyens 12 de raccordement. Dans l'exemple représenté, ce débitmètre est disposé en amont du répartiteur 27 servant à répartir le flux issu de la source de solution aqueuse entre les passages desdits paliers. Grâce à cette disposition, le débitmètre permet de mesurer le débit de fuite de l'ensemble des passages ou le débit de fuite d'un seul passage lorsque les organes d'obturation disposés en aval du répartiteur sont en position fermée à l'exception de celui alimentant le passage dont le débit doit être mesuré. Il est ainsi possible, au démarrage du dispositif d'agitation, de vérifier le débit de fuite de chacun des passages avant au cours de la poursuite de l'utilisation du dispositif de mesurer le débit de fuite total, c'est-à-dire correspondant à l'ensemble des passages. En variante, il aurait pu être prévu une pluralité de moyens de mesure aptes à mesurer chacun le débit de fuite au niveau d'un passage pour obtenir de manière permanente en temps réel et en continu le débit de fuite au niveau de chaque passage. Généralement, une telle solution est plus onéreuse et pas forcément nécessaire. Les moyens 14 de mesure représentés sont ici formés par un débitmètre. Toutefois, ce débitmètre aurait pu, de manière équivalente, être remplacé par un capteur de comptage émetteur d'impulsions.

Comme mentionné ici, le dispositif comprend encore des moyens 15 de définition d'une plage de référence du débit mesuré. Ces moyens 15 de définition comprennent des moyens de mémorisation aptes à mémoriser les données de référence du débit. Les données mémorisées peuvent être des données prédéfinies, en particulier des données de constructeur pré-mémorisées ou des données fournies par l'utilisateur à l'aide par exemple d'une interface d'entrée de données encore appelée interface homme-machine et qui peut prendre la forme d'un clavier, d'un écran tactile ou autre.

Le dispositif comprend encore des moyens 16 d'émission d'un signal d'alerte lorsque le débit de fuite est à l'extérieur de ladite plage de référence. A cet effet, le dispositif comprend un émetteur sonore, tel qu'une sirène, ou une sonnerie ou tout autre appareil d'alarme sonore ou un émetteur lumineux, tel qu'un témoin lumineux, et des moyens de commande dudit émetteur. Ces moyens de commande peuvent comprendre des moyens de traitement et de calcul, tels qu'un microprocesseur, configurés pour comparer les données mesurées avec les données de référence et pour définir des données de commande en fonction du résultat de la comparaison. Ainsi, à titre d'exemple, lorsque le débit mesuré par le débitmètre est au-dessus de la valeur maximale de débit définie par la plage de référence, cela signifie qu'au moins la garniture d'étanchéité intérieure d'au moins l'un des passages est défectueuse. Le résultat de la comparaison entre débit mesuré et plage de référence permet alors d'émettre un signal de commande des moyens 16 d'émission d'un signal d'alerte pour alerter l'utilisateur qui prendra alors les mesures nécessaires pour par exemple arrêter le dispositif et procéder, soit au changement de la garniture d'étanchéité intérieure, soit à une modification, à l'aide des moyens de compression, de la pression exercée sur ladite garniture d'étanchéité intérieure pour renforcer son efficacité. Lorsqu'à l'inverse, le débit de fuite mesuré est inférieur à la valeur basse de la plage de référence, cela peut signifier que le contenu de la cuve a pénétré dans au moins l'un des paliers. Il existe alors un risque de durcissement de la composition ayant pénétré dans le palier, en particulier lorsque cette dernière est du béton et par suite, un risque de blocage de l'arbre. A nouveau, le résultat de la comparaison entre données mesurées et données de référence permet d'émettre un signal de commande des moyens d'émission d'un signal d'alerte pour alerter l'utilisateur qui, généralement, procèdera alors à l'arrêt de la machine puis au test de chacun des passages par ouverture/fermeture de l'organe d'obturation de chacun des passages afin d'identifier le ou les passages défectueux et procéder, si nécessaire, au remplacement de certaines pièces.

Dans l'exemple décrit ci-dessus, l'utilisateur procède, à l'émission d'un signal d'alerte, à l'arrêt du dispositif pour empêcher la poursuite de la rotation du ou des arbres. Bien évidemment, cet arrêt peut également être commandé automatiquement dès l'émission d'un signal d'alerte. Dans l'exemple représenté, le dispositif 1 d'agitation est intégré à une centrale, telle qu'une centrale à béton qui comprend en outre des moyens 23 d'alimentation du dispositif 1 d'agitation et en particulier, de la cuve du dispositif en constituants de la composition. L'un de ces constituants est une solution aqueuse, la quantité de solution aqueuse à ajouter est prédéfinie. Ces moyens 23 d'alimentation sont pilotés à l'aide d'unité 22 de pilotage configurée pour piloter lesdits moyens 23 d'alimentation en fonction du débit de fuite mesuré. Aussi, le dispositif comprend des moyens 21 de transmission de données représentatives du débit de fuite mesuré à l'unité 22 de pilotage. Ainsi, une trémie peut être positionnée au-dessus de la cuve. Cette trémie est équipée en sortie d'un organe d'obturation, tel qu'une vanne pilotable. Cet organe d'obturation est piloté à l'aide de l'unité 22 de pilotage configurée pour piloter l'ouverture ou la fermeture de l'organe d'obturation. Cette ouverture de l'organe d'obturation permet, à partir de ladite trémie, l'alimentation de la cuve du dispositif en solution aqueuse. La trémie est encore équipée en amont, c'est-à-dire en entrée, d'au moins un organe d'obturation disposé sur la liaison de la trémie à la source d'alimentation en solution aqueuse qui peut être le réseau d'eau. La trémie est donc alimentée en solution aqueuse à partir de la source d'alimentation en solution aqueuse et vidée dans la cuve du dispositif 1 d'agitation en fonction des besoins. L'unité 22 de pilotage tient compte, pour la commande de l'ouverture de l'organe d'obturation permettant l'alimentation de la cuve en solution aqueuse, du débit de fuite mesuré. A cet effet, l'unité 22 de pilotage comprend des moyens de traitement et de calcul, tels qu'un microprocesseur, configurés pour soustraire de la quantité de solution aqueuse devant être ajoutée dans la composition le débit de fuite total mesuré et transmis pour limiter l'erreur entre la quantité de solution aqueuse souhaitée dans la composition et la quantité de solution aqueuse réelle de la composition.

Dans le cas où l'addition d'une solution aqueuse dans la cuve s'opère manuellement, l'opérateur peut, de la même manière, par calcul, soustraire de la quantité de solution aqueuse prédéfinie à ajouter dans la cuve, le débit de fuite mesuré. Il en résulte une précision améliorée de la teneur en solution aqueuse de la composition.

La centrale, telle que décrite ci-dessus, fonctionne donc comme suit. A la mise en route du dispositif 1 d'agitation, l'étanchéité des paliers des arbres du dispositif est contrôlée. Pour ce faire, les passages, au niveau de chaque palier, sont successivement alimentés en solution aqueuse et le débit mesuré est contrôlé. Si le débit mesuré est conforme, tous les organes d'obturation sont ouverts et le débit mesuré est celui qui représente le débit de fuite au niveau de l'ensemble des paliers. L'utilisateur peut, à ce stade, définir une plage de référence des débits de fuite, si cela n'a pas déjà été fait au préalable. L'entraînement en rotation des arbres débute et les constituants de la composition à agiter sont ajoutés dans la cuve. La valeur de débit de fuite mesuré peut être prise en considération pour l'ajout du composant correspondant à une solution aqueuse dans la cuve. Si la valeur du débit mesuré sort de la plage de référence définie, une alarme est émise.

## Revendications

1. Dispositif (1) d'agitation, notamment du genre malaxeur, pour l'agitation de compositions de préférence aqueuses, ledit dispositif comprenant une cuve (2) délimitée au moins par deux parois (3) latérales en regard et un fond (4), au moins un arbre (5) rotatif dit mélangeur, deux paliers (6) supports par arbre (5), les paliers (6) supports d'un arbre (5) entourant chacun ledit arbre (5) et étant disposés chacun au moins partiellement dans un logement (7) au niveau d'une des deux parois (3) latérales en regard de la cuve (2), une garniture (8) d'étanchéité, dite intérieure, par palier (6) support, ladite garniture (8) d'étanchéité intérieure fermant au moins partiellement un passage (9) de communication de l'intérieur (2A) de la cuve (2) avec l'extérieur (2B) de la cuve via ledit palier (6), cette garniture (8) d'étanchéité intérieure étant disposée à l'intérieur du palier (6), autour de l'arbre (5), dans ledit passage (9), et des moyens (10) de compression de ladite garniture (8) d'étanchéité intérieure aptes à presser, en direction de l'intérieur de la cuve (2) ladite garniture (8) contre un siège (11),
**caractérisé en ce que** le dispositif comprend des moyens (12) de raccordement de l'extrémité (91) du passage (9) débouchant, via le palier (6), à l'extérieur de la cuve (2) à une source (13) d'alimentation en solution aqueuse sous pression, des moyens (14) de mesure d'un paramètre représentatif du volume d'alimentation en solution aqueuse d'un ou plusieurs passages (9) et appelé débit de fuite, des moyens (15) de définition d'une plage de référence dudit débit de fuite et des moyens (16) d'émission d'un signal d'alerte, lorsque le débit de fuite est à l'extérieur de ladite plage de référence.

2. Dispositif (1) d'agitation selon la revendication 1,
**caractérisé en ce que** les paliers (6) support d'un arbre (5) affectent chacun la forme d'un corps tubulaire coaxial à l'arbre (5) et monté fixe en rotation et en translation par rapport audit arbre (5) en ménageant, entre le palier (6) et l'arbre (5), sur au moins une partie de la longueur dudit corps, un espace (17) annulaire.

3. Dispositif (1) d'agitation selon la revendication 2,
**caractérisé en ce qu'**au moins une partie du passage (9) de communication de l'intérieur de la cuve avec l'extérieur de la cuve (2) via ledit palier (6) est formée par une partie de l'espace (17) annulaire entre le palier (6) et l'arbre (5), cet espace (17) annulaire communiquant avec l'extérieur (2A) de la cuve (2) au moins via un orifice (62) radial traversant ménagé dans la paroi (61) périphérique de délimitation du palier (6) et formant l'extrémité (91) du passage (9) de communication débouchant à l'extérieur de la cuve (2).

4. Dispositif (1) d'agitation selon la revendication 3,
**caractérisé en ce que** les moyens (10) de compression disposés au moins partiellement dans l'espace (17) annulaire entre le palier (6) support et l'arbre (5) comprennent, le long de l'arbre (5), depuis l'intérieur en direction de l'extérieur de la cuve (2), une lanterne (18) et un fouloir (19), ladite lanterne (18) étant munie d'une gorge (181) périphérique externe annulaire disposée en regard de l'orifice (62) radial traversant ménagé dans la paroi (61) périphérique de délimitation du palier (6) et formant l'extrémité (91) du passage (9) de communication débouchant à l'extérieur de la cuve (2), cette gorge (181) périphérique externe de la lanterne (18) communiquant, via au moins un passage (182) radial traversant du corps de lanterne, avec l'intérieur de la lanterne (18) pour former un prolongement, de la section de passage ménagée dans le palier (6), débouchant dans l'espace (17) annulaire entre le palier (6) et l'arbre (5).

5. Dispositif (1) d'agitation selon la revendication 4,
caractérisé les moyens (10) de compression comprennent, entre la lanterne (18) et le fouloir (19), au moins une garniture (20) d'étanchéité dite extérieure, cette garniture (20) d'étanchéité extérieure se présentant, de préférence, sous forme d'au moins un anneau ouvert.

6. Dispositif (1) d'agitation selon l'une des revendications précédentes,
**caractérisé en ce que** le siège (11) de la garniture (8) d'étanchéité intérieure est formé par une surface annulaire s'étendant radialement autour dudit arbre (5), cette surface étant de préférence formée par le fond d'un lamage (63) interne dudit palier (6).

7. Dispositif (1) d'agitation selon l'une des revendications précédentes,
caractérisé en que la garniture (8) d'étanchéité intérieure comprend au moins un anneau ouvert.

8. Dispositif (1) d'agitation selon l'une des revendications précédentes,
**caractérisé en ce que** le dispositif (1) comprend des moyens (21) de transmission de données représentatives du débit de fuite mesuré à une unité (22) de pilotage de moyens (23) d'alimentation en constituants de la cuve (2).

9. Centrale pour la réalisation de composition dont au moins un constituant est une solution aqueuse, ladite centrale comprenant un dispositif (1) d'agitation des constituants de ladite composition, des moyens (23) d'alimentation du dispositif (1) d'agitation en constituants de ladite composition et une unité (22) de pilotage desdits moyens (23) d'alimentation,
**caractérisée en ce que** le dispositif (1) d'agitation est conforme à l'une des revendications 1 à 8, et **en ce que** l'unité (22) de pilotage est configurée pour piloter lesdits moyens (23) d'alimentation en fonction du débit de fuite mesuré.

10. Procédé de contrôle de l'étanchéité d'un dispositif (1) d'agitation, notamment du genre malaxeur, comprenant une cuve (2) délimitée au moins par deux parois (3) latérales en regard et un fond (4), au moins un arbre (5) rotatif dit mélangeur, deux paliers (6) supports par arbre (5), les paliers (6) supports d'un arbre (5) entourant chacun ledit arbre (5) et étant disposés chacun au moins partiellement dans un logement (7) au niveau d'une des deux parois (3) latérales en regard de la cuve (2), une garniture (8) d'étanchéité dite intérieure par palier (6) support, ladite garniture (8) d'étanchéité intérieure fermant au moins partiellement un passage (9) de communication de l'intérieur (2A) de la cuve (2) avec l'extérieur (2B) de la cuve (2) via ledit palier (6), cette garniture (8) d'étanchéité étant disposée à l'intérieur du palier (6), autour de l'arbre (5), dans ledit passage (9), et des moyens (10) de compression de ladite garniture (8) d'étanchéité intérieure aptes à presser, en direction de l'intérieur de la cuve (2), ladite garniture (8) contre un siège (11),
**caractérisé en ce que** ledit procédé comprend, pour chaque passage (9), une étape d'alimentation en solution aqueuse sous pression du passage (9) et par suite de l'intérieur (2A) de la cuve (2) par raccordement de l'extrémité du passage (9) débouchant, via le palier (6), à l'extérieur de la cuve, à une source (13) d'alimentation en solution aqueuse sous pression, une étape de mesure d'un paramètre représentatif du volume d'alimentation en solution aqueuse d'un ou plusieurs passages (9) et appelé débit de fuite, et **en ce que**, une plage de référence dudit débit de fuite ayant été définie, ledit procédé comprend en outre une étape d'émission d'un signal d'alerte, lorsque le débit de fuite est à l'extérieur de ladite plage de référence.
